# EUROPÄISCHE PATENTSCHRIFT

(11) **EP 1 844 284 B1**
(45) Veröffentlichungstag und Bekanntmachung des Hinweises auf die Patenterteilung: **09.07.2008**
(21) Anmeldenummer: 05813657.3
(22) Anmeldetag: 29.11.2005
(51) Int. Cl.: F28C 3/04, F25D 3/10, B01J 19/00

(54) **VERFAHREN ZUM DIREKTEN KÜHLEN VON REAKTIONSMEDIEN**
METHOD FOR THE DIRECT COOLING OF REACTION MEDIA
PROCEDE DE REFROIDISSEMENT DIRECT DE MILEUX REACTIONNELS

(30) Priorität: 03.12.2004 DE 102004058383
(43) Veröffentlichungstag der Anmeldung: 17.10.2007
(73) Patentinhaber: DyStar Textilfarben GmbH & Co. Deutschland KG, 65926 Frankfurt am Main (DE)
(72) Erfinder: PERNER, Andreas, 51109 Köln (DE); HAGEDORN, Stefan, 51375 Leverkusen (DE); PICKELEIN, Rainer, 40764 Langenfeld (DE)
(86) Internationale Anmeldenummer: PCT/EP2005/056324
(87) Internationale Veröffentlichungsnummer: WO 2006/058886

(56) Entgegenhaltungen:
- EP-A- 0 423 975
- EP-A- 0 853 974
- EP-A- 0 867 677
- EP-A- 1 120 598

## Beschreibung

Die vorliegende Erfindung liegt auf dem Gebiet der chemischen Verfahrenstechnik und betrifft ein Verfahren zum direkten Kühlen von Reaktionsmedien mit Hilfe flüssiger Gase.

Die Wärmeabfuhr bei chemischen Prozessen durch ein Kühlmedium kann indirekt oder direkt erfolgen. Die indirekte Kühlung geschieht entweder mit Hilfe eines reaktoreigenen Kühlmantels oder eines intern oder extern angeordneten Wärmetauschers, wie beispielsweise einer Kühlschlange. Bei diesem Verfahren nimmt der Wärmetauscher die abzuführende Wärmemenge mittels eines Wärmeträgers, beispielsweise Sole, auf. Charakteristisch dabei ist, dass das Kühlmedium keinen direkten Kontakt mit dem Reaktionsmedium hat.

Es ist auch bereits bekannt und gängige Praxis, chemische Prozesse direkt zu Kühlen. Dabei kommen Wassereis, Trockeneis-Pellets aus Kohlendioxid und Kohlendioxid-Schnee, welcher durch eine Schneekanone auf die Oberfläche innerhalb des Reaktors zugegeben wird, zur Anwendung. Diese Verfahren sind aber allesamt mit zum Teil erheblichen Nachteilen belastet. Eine Kühlung mittels Wassereis ist naturgemäß nur bei wässrigen Systemen möglich und scheidet bei nichtwässrigen Systemen, bei starken Säuren, Oleum und dergleichen aus. Die Zugabe von Wassereis führt zu einer Verdünnung des Reaktionsmediums und damit zu einer Erniedrigung der Produktkonzentration. Verbunden damit sind beispielsweise ein höherer apparativer Aufwand durch größere Behältervolumen, sowie Mehrkosten durch erhöhtes Abwasservolumen.

Die Zugabe von Kohlendioxid-Pellets oder Kohendioxid-Schnee ist wegen des Eintrags von Feststoff schlecht regelbar und kann somit zu Nachkühleffekten durch noch nicht sublimiertes Kohlendioxid führen. Außerdem können durch die relative lange Verweilzeit der Kohlendioxid-Pellets das Produkt oder sogar der Reaktor selbst durch örtliche Unterkühlungen geschädigt werden. Örtliche Unterkühlungen treten insbesondere dann auf, wenn die Dichte der Kohlendioxid-Pellets größer ist als die Dichte des zu kühlenden Reaktionsmediums und sich in strömungsberuhigten Zonen des Reaktors Pellets ansammeln.
Bei der Verwendung von Kohlendioxid-Schnee können ähnlich negative Auswirkungen durch Aufschwimmen des spezifisch sehr leichten Schnees an der Oberfläche des Reaktionsmediums auftreten. Da der Wärmetausch nur durch das relativ unvollständige Einrühren des Kohlendioxid-Schnees unter die Oberfläche des Reaktionsmediums abläuft, kann sich aufgrund der im Gasraum ablaufenden Sublimation eine tiefkalte Gasphase (max. ca. -70°C bei 1 bar_{abs}) einstellen, die den Reaktor, sowie nachfolgende Bauteile und Apparate, wie beispielsweise Rohrleitungen, Behälterauskleidungen, Beschichtungen, metallische Plattierungen unterschiedlicher Wärmeausdehnung usw., schädigen kann. So besteht insbesondere die Gefahr des Abplatzens von Emailbeschichtungen und des Versprödens von Gummierungen und Kunststoffen.

EP 0 423 975 betrifft ein Verfahren zur Kühlung einer Flüssigkeit, bei dem ein Kältemittel in die Flüssigkeit eingeführt wird. Das Kältemittel kann beispielsweise flüssiger Stickstoff sein und wird über einen einfachen Einlass, typischerweise in Form eines Rohres, das bevorzugt nicht in das Innere des Behalters ragt, zugeführt. Das Verfahren ist darüber hinaus dadurch gekennzeichnet, dass unter dem Einlass des Kältemittels ein unter Druck stehendes Gas, typischerweise Stickstoff, zugeführt wird. Dies geschieht über eine besonders gestaltete Vorrichtung so, dass Gasblasen in dem Bereich, in dem das Kältemittel eintritt, für Bewegung sorgen und mithelfen, das Kältemittel in kleine Tröpfchen aufzubrechen, die leichter verdampfen. Das Kältemittel wird weder über eine Injektordüse eingeführt, noch arbeitet das Verfahren mit einem Leitstrahlmischer.

EP 0 867 677 betrifft einen Kühlturm für einen Wärmeaustausch für eine zu verarbeitende Flüssigkeit, der mit einem Einlass zum Einbringen eines Kühlmittels in das Innere des Turms versehen ist. Das Kühlmittel ist beispielsweise flüssiger Stickstoff und wird über eine Injektionsdüse in die im unteren Teil des Turmes angesammelte bereits gekühlte Flüssigkeit eingebracht. Die Kühlung der Flüssigkeit erfolgt innerhalb des Turmes, wo auf darin angeordneten Platten die Flüssigkeit in Filmform vorliegt und mit dem gasförmigen Kühlmittel in Kontakt tritt.

EP 0 853 974 betrifft ein Verfahren zum Kühlen eines Reaktors, wobei eine kryogene Flüssigkeit in einem nach unten gerichteten Strom in einen Reaktorbehälter injiziert und die Inhaltsstoffe des Reaktorbehälters mittels direkten Wärmeaustausches mit der kryogenen Flüssigkeit gekühlt werden. Als kryogene Flüssigkeit sind flüssiger Stickstoff und flüssiges Kohlendioxid genannt, die auch über eine Injektionsdüse in den Reaktorbehälter injiziert werden können. Allerdings wird die kryogene Flüssigkeit nicht unter die Oberfläche des Reaktionsgemisches gebracht. Ebenso wenig wird die Verwendung eines Leitstrahlmischers offenbart.

EP 1 120 598 betrifft ein Verfahren zum Zuführen einer kryogenen Flüssigkeit unter hohem Druck in einen Reaktionsbehälter zum optimalen Kühlen von exothermen Reaktionen. Als kryogene Flüssigkeiten kommen wiederum Stickstoff und Kohlendioxid in Frage, die dem Reaktionsbehälter über ein mit einer Düsenvorrichtung versehenen Rohr zugeführt werden. Auch nach diesem Verfahren wird jedoch die kryogene Flüssigkeit nicht unter die Oberfläche des Reaktionsgemisches gebracht. Ebenso wenig wird die Verwendung eines Leitstrahlmischers offenbart.

Es bestand damit erheblicher Bedarf nach einem verbesserten Verfahren zum direkten Kühlen von Reaktionsmedien, das die oben beschriebenen Nachteile nicht aufweist.

Gegenstand vorliegender Erfindung ist ein Verfahren zum direkten Kühlen von Reaktionsgemischen gemäß Anspruch 1.

Geeignete flüssige Gase, die in dem erfindungsgemäßen Verfahren verwendet werden können, sind insbesondere flüssige Gase, die nach Eintrag in das Reaktionsgemisch unter Wärmeaufnahme entspannt werden können und sodann das Reaktionsgemisch in gasförmigem Zustand wieder verlassen, ohne mit den Bestandteilen des Reaktionsgemisches chemisch in eine Wechselwirkung getreten zu sein. Dafür kommen beispielsweise flüssige Edelgase, wie insbesondere Helium in Betracht. Bevorzugt sind solche flüssigen Gase aber flüssiges Kohlendioxid und flüssiger Stickstoff.

Beim erfindungsgemäßen Verfahren erfolgt der Eintrag des flüssigen Gases unter die Oberfläche des Reaktionsgemisches über eine Rohrleitung. Diese ist mit einer Injektordüse ausgestattet, an der die Entspannung des flüssigen Gases stattfindet. Es hat sich darüber hinaus als besonders vorteilhaft erwiesen, eine Injektordüse mit nachgeschalteter Venturidüse zu verwenden. Dadurch findet eine intensive Vorvermischung des noch teilweise flüssigen Gases mit dem Reaktionsgemisch statt und der Masseimpuls der Düsenströmung (3 Phasenströmung im Falle von Kohlendioxid, 2 Phasenströmung im Falle von Stickstoff), erhöht sich, so dass die Verdüsung stabiler abläuft.

Im Falle von flüssigem Kohlendioxid werden die sich am Düsenaustritt bildenden Eiskristalle normalerweise durch die hochturbulente Strömung weggerissen. Gegebenenfalls kann die Injektordüse aber auch örtlich begleitheizt werden.

Sofern gewünscht bzw. erforderlich kann die Einbringung des Kühlmediums in an sich bekannter Weise automatisiert und Temperatur geregelt erfolgen.

Verwendbare Injektordüsen sind dem Fachmann bekannt und im Handel erhältlich. Hersteller solcher Düsen sind beispielsweise die Firmen Düsen-Schlick GmbH in Coburg und Lechler GmbH in Metzingen, beide Bundesrepublik Deutschland.

Beim erfindungsgemäßen Verfahren wird zusätzlich für eine gute Durchmischung des Reaktionsgemisches mit dem Kühlmedium gesorgt und lokale Unterkühlungen vermieden. Dies geschieht durch einen elektrisch betriebenen Leitstrahlmischer. Der Leitstrahlmischer ist bevorzugt unterhalb des Eintritts des flüssigen Gases in das Reaktionsgemisch getaucht. Der Leitstrahlmischer ist so angebracht, dass das flüssige Gas über die Injektordüse in deren Ansaugbereich gedrückt wird.

Ein Leitstrahlmischer sorgt insbesondere für einen intensiven Kontakt zwischen dem Reaktionsgemisch und dem noch kalten, gasförmigen Kühlmedium. Dies führt zu einer effizienten Restkälteausnutzung des gasförmigen Kühlmediums und damit zu einem reduzierten Kühlmittelbedarf. Leitstrahlmischer sind dem Fachmann an sich bekannt und in der Literatur ausführlich beschrieben.

Die Kühlleistung des erfindungsgemäßen Verfahrens kann über die Regelung des Massenstrom des flüssigen Gases in weiten Grenzen eingestellt werden. Dies geschieht insbesondere über den gewählten Durchmesser der Injektordüse, falls eine solche verwendet wird, sowie über den Systemdruck des Vorratstanks des Kühlmediums. Falls gewünscht ist eine Feinregulierung beispielsweise über ein schaltbares Magnetventil (Auf/Zu-Regelung) möglich.

Das erfindungsgemäße Verfahren löst die gestellte Aufgabe in hervorragender Weise. Es kann automatisiert und prozessnahe, sowie Temperatur geregelt gefahren werden. Verglichen mit der Kühlung mit Wassereis, zeichnet es sich durch eine bessere Raumausnutzung des Reaktors und durch weniger Abwasser aus.
Bei geringerem Kühlmittelverbrauch sind u.a. durch effiziente Ausnutzung der Restkälte des gasförmigen Kühlmediums auch große Kühlleistungen möglich, die auch Spitzenlasten abdecken. Das erfindungsgemäße Verfahren ermöglicht eine effiziente Kühlung auch in tiefkalten Bereichen (ab -40°), wobei bei Verwendung von flüssigem Stickstoff tiefere Temperaturen als bei Verwendung von flüssigem Kohlendioxid erreicht werden können. Dabei entstehen durch die gute Durchmischung kaum örtliche "Kältespitzen" und somit auch keine Produktunterkühlungen und keine Beschädigungen an beispielsweise Email-Systemen oder anderen kälteempfindlichen Werkstoffsystemen. Insgesamt resultiert also bei kürzeren Reaktionszeiten eine höhere Produktionskapazität als bei Verfahren des Standes der Technik und nicht zuletzt auch durch geringeren Reinigungs- und Instandhaltungsaufwand geringere Betriebskosten..
Das erfindungsgemäße Verfahren kann auch als Notkühlsystem bei sicherheitstechnisch kritischen Reaktionen, z.B. bei Exothermie- oder Explosionsgefahr, eingesetzt werden.
Bei Verwendung von flüssigem Stickstoff und eingeschränkt auch bei Verwendung von flüssigem Kohlendioxid erfolgt durch das aus dem Reaktionsgemisch austretende Gas automatisch eine Inertisierung des Reaktors, was bei empfindlichen Reaktanten von erheblichem Vorteil ist.
Durch den direkten Wärmeaustausch (es werden keine Wärmeaustauschflächen benötigt) zwischen dem Kühlmedium und dem Reaktionsgemisch werden Hygiene- bzw. Kontaminationsprobleme verhindert oder zumindest minimiert. Das erfindungsgemäße Verfahren eignet sich deshalb auch in besonderer Weise für Bioprozesse bzw. für die Herstellung von Vor-, Zwischen- und Endprodukten für die Pharmaindustrie.
Von weiterem Vorteil ist, dass sich gebräuchliche Rührwerksbehälter (RWB) ohne großen Aufwand nachrüsten lassen, so dass das erfindungsgemäße Verfahren ausführbar ist. Auch der Einsatz von neuartigen Rührwerksbehältern, zum Beispiel solche, die einen hochwertigen chemisch und thermisch beständigen Inliner bzw. eine Auskleidung aus Perfluoralkoxy-Copolymer (PFA), sowie eine Glasfaser/Epoxidharz-Ummantelung aufweisen (PFA/GFK Behältersysteme), ist möglich. Im Vergleich zu indirekten Wärmeaustausch-Systemen ergeben sich geringere Investitionskosten bei korrosiven bzw. abrasiven Medien.

Das erfindungsgemäße Verfahren ist somit hervorragend geeignet zur Kühlung von Reaktionsgemischen, wie sie bei der Synthese von Spezialchemikalien, beispielsweise Vor- und Zwischenprodukten für die Synthese von Pharmaka oder Farbmitteln, von Pharmaka oder Farbmittel selbst vorkommen.

### Beispiele

Die vorliegende Erfindung wird durch nachfolgende Beispiele 1 bis 3 illustriert. Es wurde jeweils ein mit Wasser gefüllter, nicht isolierter Technikums-Reaktor von 250 1 Inhalt mit flüssigem Kohlendioxid nach dem erfindungsgemäßen Verfahren gekühlt. Dabei wurde das Kohlendioxid mittels einer handelsüblichen Injektordüse mit einem Durchmesser von 2,0 mm (Beispiele 1 und 2) bzw. 2,3 mm (Beispiel 3) eingeblasen.

Als Vergleich gemäß Stand der Technik wurde Kohlendioxid-Schnee mittels einer Schneekanone auf die Wasseroberfläche geblasen (Vergleichsbeispiele 1 und 2). Bei den Beispielen 2 und 3, sowie Vergleichsbeispiel 2 wurde darüber hinaus ein handelsüblicher Leitstrahlmischer eingesetzt (1050 min⁻¹ in Beispiel 2, 1500 min⁻¹ bei maximaler hydraulischer Systembelastung in Beispiel 3 und Vergleichsbeispiel 2). Es wurden die folgenden Ergebnisse erhalten:

| Beispiel | M [kg/s] | □T [°C/min] | Q_{H20} [KW] | Q_{CO2} [KW] | □[%] |
|---|---|---|---|---|---|
| 1 | 0,034 | 0,55 | 9,6 | 12,0 | 80 |
| 2 | 0,024 | 0,40 | 7,0 | 8,5 | 82 |
| 3 | 0,033 | 0,74 | 9,6 | 11,5 | 84 |
| Vergleichsbeispiel 1 | Eine Kühlung war nicht möglich, da der CO₂-Schnee sofort wieder aus der Eintragsöffnung geblasen wurde | | | | |
| Vergleichsbeispiel 2 | 0,021 | 0,20 | 3,5 | 7,2 | 49 |

| | | | | | |
|---|---|---|---|---|---|
| M = Massenstrom CO₂ □T = Temperaturabnahme des Wassers Q_{H20} = vom Wasser abgegebene Wärmeleistung (= Kühlleistung) Q_{CO2} = durch Kohlendioxid theoretisch verfügbare Kühlleistung □[%] = Wirkungsgrad der Wasserkühlung | | | | | |

## Patentansprüche

1. Verfahren zum direkten Kühlen eines Reaktionsgemisches, wobei ein geeignetes flüssiges Gas als Kühlmedium über eine Rohrleitung, die mit einer Injektordüse ausgestattet ist, an der die Entspannung des flüssigen Gases stattfindet, unter die Oberfläche des Reaktionsgemisches gebracht wird, **dadurch gekennzeichnet, dass** unterhalb der Injektordüse ein Leitstrahlmischer so angebracht ist, dass das flüssige Gas über die Injektordüse in deren Ansaugbereich gedrückt wird.

2. Verfahren gemäß Anspruch 1, **dadurch gekennzeichnet, dass** als flüssiges Gas flüssiges Kohlendioxid oder flüssiger Stickstoff verwendet wird.

3. Verfahren gemäß Anspruch 1 und/oder 2, **dadurch gekennzeichnet, dass** eine Kühlleistung über die Regelung des Massenstrom des flüssigen Gases eingestellt wird.

4. Verfahren gemäß einem oder mehreren der Ansprüche 1 bis 3, **dadurch gekennzeichnet, dass** Vor- und Zwischenprodukte für die Synthese von Pharmaka oder Farbmitteln, Pharmaka oder Farbmittel hergestellt werden.

## Claims

1. Method for direct cooling of a reaction mixture, wherein a suitable liquid gas is introduced as a cooling medium below the surface of the reaction mixture via a pipeline which is equipped with an injector nozzle at which the expansion of the liquid gas takes place, **characterized in that** a directed jet mixer is mounted below the injector nozzle so that the liquid gas is forced via the injector nozzle into the intake region thereof.

2. Method according to Claim 1, **characterized in that** the liquid gas used is liquid carbon dioxide or liquid nitrogen.

3. Method according to Claim 1 and/or 2, **characterized in that** a cooling power is adjusted by regulating the mass flow rate of the liquid gas.

4. Method according to one or more of Claims 1 to 3, **characterized in that** precursors or intermediates for the synthesis of drugs or colorants, or drugs or colorants, are produced.

## Revendications

1. Procédé de refroidissement direct d'un mélange réactionnel, dans lequel un gaz liquide approprié est introduit en tant que milieu de refroidissement en dessous de la surface du mélange réactionnel, par l'intermédiaire d'une canalisation qui est équipée d'une buse d'injecteur au niveau de laquelle a lieu la détente du gaz liquide, **caractérisé en ce qu'**un mélangeur à jet dirigé est monté en dessous de la buse d'injecteur de telle sorte que le gaz liquide soit forcé par la buse d'injecteur dans sa zone d'admission.

2. Procédé selon la revendication 1, **caractérisé en ce que** l'on utilise du dioxyde de carbone liquide ou de l'azote liquide en tant que gaz liquide.

3. Procédé selon les revendications 1 et/ou 2,
**caractérisé en ce qu'**un pouvoir de refroidissement est ajusté en régulant le flux massique du gaz liquide.

4. Procédé selon l'une ou plusieurs des revendications 1 à 3, **caractérisé en ce que** l'on produit des précurseurs ou des intermédiaires pour la synthèse de médicaments ou de colorants, des médicaments ou des colorants.
